# EUROPEAN PATENT APPLICATION

(11) **EP 1 139 640 A2**
(43) Date of publication of application: **04.10.2001**
(21) Application number: 00850082.9
(22) Date of filing: 15.05.2000
(51) Int. Cl.: H04M 1/725, H04Q 7/32

(54) **A device connectable to a portable radio communication terminal**

(30) Priority: 30.03.2000 SE 0001134
(71) Applicant: Picofun AB, 112 34 Stockholm (SE)
(72) Inventor: Lenander, Johan, 112 44 Stockholm (SE); Ullerstam, Mans, 104 05 Stockholm (SE)
(74) Representative: Akerman, Marten Lennart

(57) **Abstract**

The present invention relates to a device for connection to a portable radio communication terminal, such as a mobile telephone, where the terminal comprises a display, a processor, a communication port (20), a keypad and a memory, the terminal having a computer game stored in its memory and is further arranged so that a user can play said computer game using said processor, display and keypad, said device comprising a communication port (4) for electrical connection to the communication port (20) of the terminal and means (8, 10, 11, 12, 15; 15') for controlling functions in said computer game.

## Description

### TECHNICAL FIELD OF THE INVENTION

The present invention generally relates to a device connectable to a portable radio communication terminal, such as a mobile telephone. Specifically, the invention relates to a device for controlling computer games, which are at least partially storable and executable in the terminal.

### DESCRIPTION OF RELATED ART

Mobile telephones are today used especially for speech communication but they are also usable for sending text messages. The keypad of a mobile telephone is not user-friendly regarding input of characters.

A newly introduced aid for text communication is a keyboard, which can be connected to a mobile telephone, a so-called chatboard. Since the most usual characters are easily accessible from the buttons of the chatboard, it is easy to write text messages.

It is also possible to play simple computer games on mobile telephones. It can also here be difficult to obtain a good functionality of the games with access to only the keypad of the mobile telephone. It is not possible to make the terminal perform a desired result from a combination of keys pressed down at an instant. The interface of the keypad is not designed for playing computer games. It takes a rather long "learning time" to get used to which buttons to use for different functions. It could be difficult to move ones fingers between different buttons in order to move game objects in different directions. It is from an ergonomic point of view difficult to get a good hold of the mobile telephone and, at the same time, easily to be able to move game objects. As the mobile telephones become smaller it will additionally be more difficult to obtain a good functionality of computer games with access to only the keypad of the mobile telephone.

### BACKGROUND OF THE INVENTION

An object of the present invention is to provide a user-friendly device for simply and comfortably being able to play computer games on a portable radio communication terminal.

Further objects of the present invention will be apparent from the following description.

In accordance with the present invention a device according to claim 1 is provided.

An advantage of the invention is that it makes it possible simply and comfortably to play games on portable radio communication terminals.

A further advantage is that the inventive device makes it possible to play games on terminals of different sizes.

Yet another advantage of a device according to the invention is that it is simple, robust and reliable in its structure.

Further advantages and features of the invention will be apparent from the description below.

### BRIEF DESCRIPTION OF THE DRAWINGS

The invention will be described more in detail below with reference to the enclosed drawings, which are only shown to illustrate the invention and shall therefore in no way limit the same, in which:
Fig. 1 shows a mobile telephone with communication ports for connection to external units;
Fig. 2a shows a game board having a user-friendly interface for games;
Fig. 2b shows another game board having a user-friendly interface for games; and
Figs. 3a to 3d show four different embodiments of a game board.

### DETAILED DESCRIPTION OF PREFERRED EMBODIMENTS

In the following description, for describing and not limiting purposes, specific details are given, such as particular applications, techniques, methods, etc., in order to provide a thorough understanding of the present invention. However, it will be apparent for a person skilled in the art that the invention may be practised in other embodiments that depart from these specific details. In other instances, detailed descriptions of well-known methods, protocols, arrangements or circuits are omitted in order not to obscure the description of the present invention with unnecessary details.

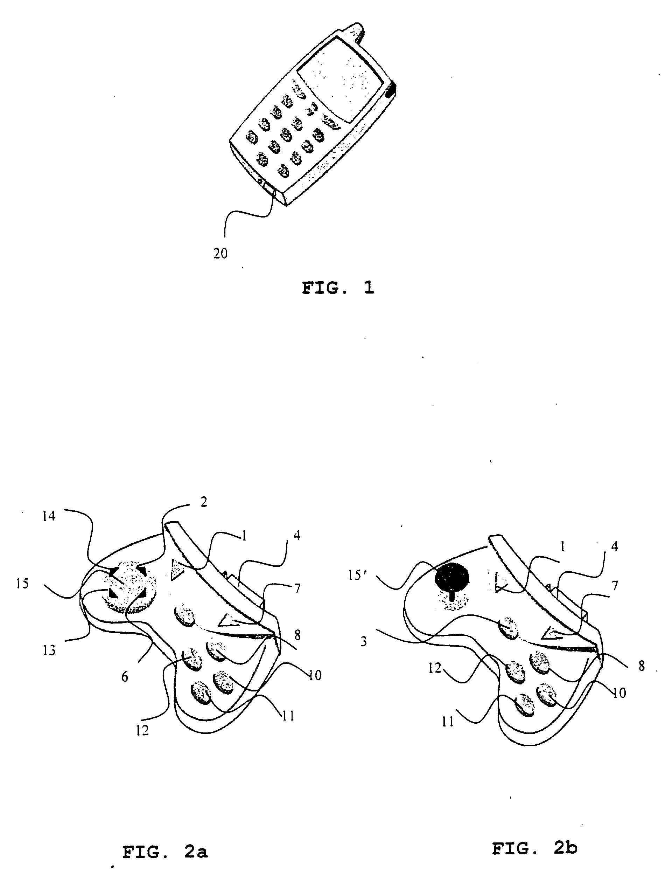

First, a mobile telephone is shortly described with reference to Fig. 1 as an example of a portable radio communication terminal, to which the inventive device can be connected. A mobile telephone normally comprises a receiver, a transmitter, a display, a processor, a keypad, an antenna and a memory. For the present invention to function it is also necessary that the mobile telephone comprises a communication port 20 for electrical connection of an external device, which is included e.g. in Ericsson's telephone model T18s.

It is described above that a mobile telephone normally has a processor and a memory but, of course, the invention will function equally well even if the mobile telephone has several processors or several memories.

A first embodiment of the invention will now be described with reference to Fig. 2a. A game board or a separate control panel or console, or a so-called gameboard, has a communication port 4 for connection to a corresponding communication port (20 in Fig. 1) of a mobile telephone. Besides an electrical transmission of signals to the mobile telephone also mechanical functions are utilized at the communication port 4. On one hand, a secure mechanical connection is needed to prevent interruption in connection with signalling from the game board to the mobile telephone. On the other hand, the mechanical connection is utilized also for the display of the mobile telephone, where computer games are shown, to be firmly attached to the game board.

In an alternative design a cable is used between the game board and the mobile telephone to avoid that movements of the game board, which e.g. arise if the user makes intense movements, are transmitted to the mobile telephone. Intense movements of the display make it more difficult to see what is shown thereon.

A button 15 suited for computer games is utilized to control functions in computer games, such as moving objects on the display up, down, to the left and to the right. The button 15 is circular with arrows in four different directions in order to make it simple to see which part of the button that should be pressed to obtain a given function. The top part 2 of the button 15 gives the function "up/forwards", the bottom part 13 of the button 15 gives the function "down/backwards". In the same way, the left part 14 of the button 15 gives the function "left" and the right part 6 gives the function "right". Each pressing of buttons generates a signal to the mobile telephone which corresponds to a pressing of the button directly on the keypad of the mobile telephone. A pressing e.g. on "up/forwards" 2 could generate a signal which is interpreted as a two of the processor of the mobile telephone. Correspondingly, a pressing on "left" 14 is e.g. interpreted as a four, on "right" 6 as a six and on "down/backwards" as an eight of the processor of the mobile telephone.

Since the signals generated by pressings of buttons on the game board are identical with those signals which would have been generated if the pressing of buttons had taken place directly on the keypad of the mobile telephone, the game board will function without any adjustments of the computer games in the mobile telephone, i.e. in respect of the computer game it will not involve any difference if the user plays through the keypad of the mobile telephone or through the game board. Thus, the game board does not need any specific software to be able to be utilized with computer games intended for mobile telephones.

There are four buttons 8, 10, 11, 12, where e.g. button 8 corresponds to a three, button 10 corresponds to a nine, button 11 corresponds to a seven and button 12 corresponds to a one in the keypad of the mobile telephone. These buttons 8, 10, 11, 12 are utilized for other functions in the computer game. The functions can e.g. be that button 8 corresponds to "jump", button 10 corresponds to "fire right", button 11 corresponds to "duck" and button 12 corresponds to "fire left". The computer games that exist today are of a rather simple nature but in a near future more advanced computer games may, as those present in PC environment, also function in mobile telephones, whereby the need of dedicated game boards will increase with an additional need of more buttons with edicated functions.

Alternatively, computer games can be developed especially in respect of the game board and thereby utilize the button pressings on the game board which do not have any counterpart on the keypad of the mobile telephone.

The game board can be manufactured with the intention to be used with specific mobile telephones and therewith it has specific buttons for specific functions. Usable functions are e.g. "yes", "no", left arrow 1 and right arrow 7, which are very common buttons for operating in menus of mobile telephones. Another function that could be practical is a button (shown as 3 in Fig. 2b), which by means of only one pressing generates a series of signals that manoeuvres through the menus and starts a function "play game". A particularly usable function in computer games is a button that repeats its function when the button is kept pressed down. If e.g. a "fire" button is kept pressed down, it is "fired" continuously in the game without the button having to be pressed down repeatedly or, if it e.g. is a "left button", movement takes place repeatedly to the left without the button having to be pressed down repeatedly.

A further button that facilitates for the user is one that generates a series of signals which automatically connects the mobile telephone to a server on the Internet or to a modem pool to download computer games to the memory of the mobile telephone (on the assumption that the terminal has the possibility to connect to the Internet).

Another button that is usable for enhanced game experience is a volume button. With such a button on the game board the volume can easily be increased or decreased during the game.

A second embodiment will now be described with reference to Fig. 2b. Here, a joystick 15' is shown mounted on a game board. Just as in the first embodiment a communication port 4 is utilized for signalling to the mobile telephone. Movement of the joystick 15' in different directions generates signals that are identical with those generated of the keypad of the mobile telephone. This results in the first embodiment that computer games in the mobile telephone will function independently of whether the keypad of the mobile telephone or the joystick of the game board is used or not.

The joystick 15' is shown in a simple embodiment with sensors in eight directions, which identify how the joystick 15' moves. Also in this embodiment more buttons 8, 10, 11, 12 may be used for more functions, e.g. a specific button for "firing". Also, buttons 1, 3, 7 for operating in the menus of the mobile telephone may, as in the first embodiment, be utilized on the game board.

The shape of the joystick 15' shown in Fig. 2b is only one example, whereby alternatively other embodiments of joysticks can be utilized. Some more advanced joysticks may, however, require that the computer game is particularly adjusted for functioning with those.

Control in diagonal directions can be obtained by generating two mutually orthogonal directions, e.g. right/up to obtain control obliquely up to the right. If the computer game can handle diagonal control functions, corresponding signals may be directly generated.

Also other variations of control devices can be utilized, such as two separate buttons, which when pressed down simultaneously will generate a signal for diagonal movement, a pressure-sensitive plate or sensor, a gyro, a roller ball or a fixed ball, such as the point device in an IBM Thinkpad.

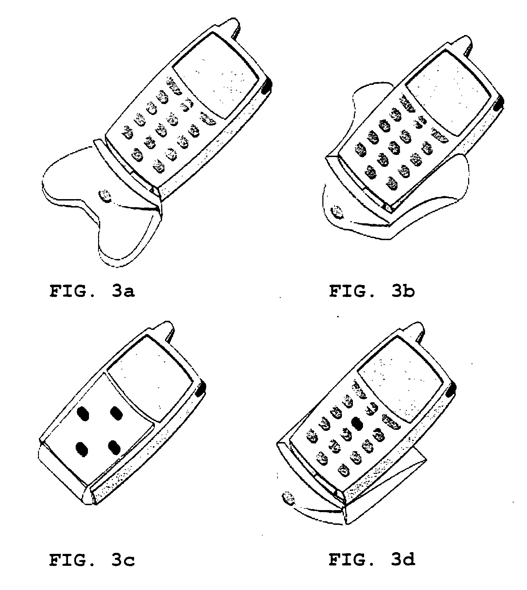

Different ergonomic designs of the game board will now be described with reference to Figs. 3a to 3d. In Fig. 3a a game board is shown, as described in Fig. 2a or Fig. 2b, connected to a mobile telephone. In Fig. 3b a game board is shown, where the board is designed so that the controls are arranged along the sides of the mobile telephone when the game board is connected to the mobile telephone. The game board illustrated in Fig. 3c is designed so that the controls are arranged above the keypad of the mobile telephone when the game board is connected to the mobile telephone. In this embodiment some buttons may mechanically directly press down corresponding buttons on the mobile telephone. Fig. 3d shows an alternative where the controls are placed under the mobile telephone.

In all cases but the one in Fig. 3c the user can use the mobile telephone without being impeded by the game board, e.g. to answer an incoming call or to call someone via the mobile telephone.

Several of these designs are ergonomically advantageously designed with an interface suitable for games, which makes it possible for the user after just a short "learning period" simply to be able to play computer games. The ergonomic design makes it possible to play with one as well as two hands and the joystick or the corresponding button will enable movement in different directions without movement of the hand to different buttons.

The game board can be designed with further communication ports, which e.g. can be connected to a headset.

The communication ports above described can in all embodiments be e.g. USB ports but the signal transfer could also be performed by infrared transmission or by radio waves which utilize Bluetooth.

The invention is, of course, not limited to the embodiments described above and illustrated in the drawings but can be modified within the scope of the enclosed claims.

## Claims

1. A device to be connected to a portable radio communication terminal, such as a mobile telephone, where the terminal comprises a transmitter, a receiver, an antenna, a display, a processor, a communication port (20), a keypad and a memory, the terminal having a computer game stored in its memory and is further arranged so that a user can play said computer game using said processor, display and keypad, said device comprising a communication port (4) for electrical connection to the communication port (20) of the terminal,
**characterized in that**
the device further comprises means (8, 10, 11, 12, 15; 15') for controlling functions in said computer game.

2. The device as claimed in claim 1, wherein said means comprises a button (15) for moving objects on said display in two dimensions.

3. The device as claimed in claim 2, wherein said means comprises a button (15) for moving objects on said display in two dimensions in dependence of where on the button (15) the pressing down is effected.

4. The device as claimed in claim 1, wherein said means comprises a joystick (15') for moving objects on said display in two dimensions.

5. The device as claimed in any of the preceding claims, comprising further buttons (1, 7) for input of data.

6. The device as claimed in any of the preceding claims, wherein the communication port (4) of the device is connected to the communication port (20) of the terminal through a cable.

7. The device as claimed in any of the preceding claims, comprising a further button (3), which when pressed down generates a series of signals that automatically manoeuvres through a menu in the terminal and activates said computer game.

8. The device as claimed in any of the preceding claims, comprising a further button, which when pressed down generates a series of signals that automatically connects the terminal to a page on the Internet which comprises the possibility to download computer games to the memory of the terminal.

9. A game terminal, **characterized in that** it comprises:
- a portable radio communication terminal that includes a transmitter, a receiver, an antenna, a display, a processor, a communication port (20), a keypad and a memory; and
- a device that comprises a communication port (4),
wherein:
- said device and said radio communication terminal are disconnectably connected to each other through the communication port (4) of the device and the communication port (20) of the terminal;
- said radio communication terminal having a computer game stored in its memory and is further arranged so that a user can play said computer game using said processor, display and keypad; and
- said device further comprising means (8, 10, 11, 12, 15; 15') for controlling functions in said computer game.

10. The game terminal as claimed in claim 9, wherein said computer game is exchangable for a new computer game downloaded from a data base through the Internet using the transmitter, receiver and antenna of the terminal.

11. The game terminal as claimed in claim 9, in which said computer game is exchangable for a new computer game downloaded from a data base through a modem pool.
